(19) Europäisches Patentamt
European Patent Office
Office européen des brevets

(11) **EP 1 079 612 A2**

(12) **EUROPEAN PATENT APPLICATION**

(43) Date of publication:
**28.02.2001 Bulletin 2001/09**

(51) Int. Cl.[7]: **H04N 5/335**, H04N 5/225

(21) Application number: **00117302.0**

(22) Date of filing: **18.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **23.08.1999 JP 23522499**

(71) Applicant: **NEC CORPORATION**
**Tokyo (JP)**

(72) Inventor: **Ishida, Haruyasu**
**Chofu-shi, Tokyo (JP)**

(74) Representative:
**VOSSIUS & PARTNER**
**Siebertstrasse 4**
**81675 München (DE)**

(54) **Solid state close-up imaging apparatus**

(57) A solid state close-up imaging apparatus is mounted to take in light reflected at a microscopic object to carry out photoelectric conversion of a formed image through an image pickup device. The solid state close-up imaging apparatus includes a black box with the truncated quadrangular prism form having an internal black space and having the image pickup device accommodated in the black space, and a pinhole provided in a top surface of the black box with the truncated quadrangular prism form, and a light emitting device mounted to extend along a side surface of the black box with the truncated quadrangular prism form. It is thereby possible to eliminate the need for lens, and provide the compact and lightweight solid state close-up imaging apparatus which can be moved to a desired position for close-up.

FIG. 1

EP 1 079 612 A2

Printed by Xerox (UK) Business Services
2.16.7 (HRS)/3.6

## Description

The present invention relates to a solid state close-up imaging apparatus to pick up a close-up image of a small size (i.e. microscopic) object. More particular, the invention relates to a solid state close-up imaging apparatus using the principle of a pinhole camera.

In recent years, there have been proposed many imaging means using a solid state imaging device as an endoscope apparatus to observe a microscopic portion in a body, which can not directly be observed by the naked eye.

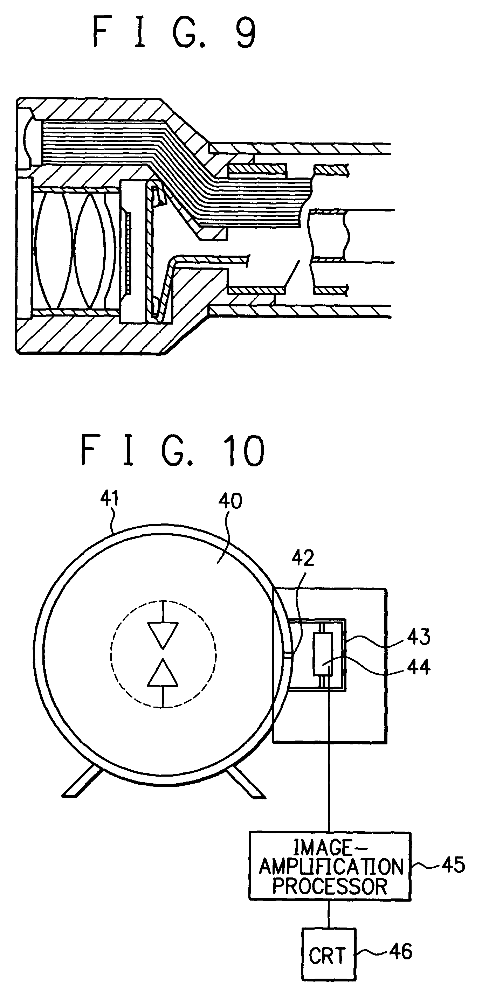

An endoscope using the solid state imaging device as the imaging means includes the endoscope with a built-in solid state imaging device disclosed in Japanese Laid-open Patent Application No. Sho 60-221719 (221719/1985:"first prior art"). The endoscope disclosed by the application for the purpose of improving packaging density of the solid state imaging device and realizing miniaturization thereof, characterizes the solid state imaging device attached to a flexible printed wiring board is accommodated in an insertion portion on the end as shown by Fig. 9.

Further, the prior art having a technical field similar to the present invention includes a partial discharge monitoring apparatus disclosed in Japanese Laid-open Patent Application No. Hei 5-119103 (119103/1993: "second prior art"). In the second prior art, as shown by Fig. 10, a pinhole 42 is provided in a body 41 of a tank 40, and a black box 43 is positioned to be communicated with the inside of the tank through the pinhole 42. A solid state imaging device 44 is disposed in the black box 43 to produce an image by light passing through the pinhole 42 and convert the image into a video signal, and the video signal is fed to a CRT 46 through an image-amplification processor 45, resulting in displaying the image.

The prior art having the technical field similar to that of the present invention also includes a semiconductor imaging apparatus disclosed in Japanese Unexamined Patent Publication No. 10-65132. In the third prior art, as shown in Fig. 11, the semiconductor imaging apparatus is mounted to take in light to be imaged and carry out photoelectric conversion of the formed image through an image pickup device 51. The semiconductor imaging apparatus includes a package 52 having an internal black space and an image pickup device accommodated in the black space, and a pinhole 53 to take in the black space the light to be imaged and produce an image of an object on an imaging surface of the image pickup device 51.

The above-mentioned prior arts, however, has the problems as will be discussed below.

According to the first prior art, in the endoscope with the built-in solid state imaging device, three lens are employed to cause the solid state imaging device to produce an image of an object as shown in Fig. 9 so that highly precise machining is required for clear imaging by a combination of the lens. Thus, there are a first problem of an expensive apparatus seriously affected by vibration and shock, a second problem of poor operability due to heavy weight of both the lens and a frame thereof, and a third problem of a dark image or a partially unclear image due to dirt or condensation caused on a cover glass or the lens. Further, there are a fourth problem unique to the lens, in that the lens can provide due to shallow depth of field an image which becomes clear only at a focused position in case of an object having a greater depth, and a fifth problem in that the lens is employed to produce the image of the object, resulting in a large-sized apparatus unsuitable for close-up use.

Further, according to the second prior art, the partial discharge monitoring apparatus, disclosed in Japanese Laid-open Patent Application No. Hei 5-119103 (119103/1993), is mounted to monitor discharge in the tank. Hence, a pinhole camera is fixed to the tank, and can not be moved to a position to be monitored for close-up. In addition, the apparatus used only to monitor the discharge includes no lighting system.

Further, according to the third prior art, the semiconductor imaging apparatus disclosed in Japanese Laid-open Patent Application No. Hei 10-65132 (65132/1998) has no lighting system for the object. Therefore, when the apparatus is used for close-up, it is impossible to produce an image with high contrast enough to distinguish the object by a slight amount of light at a time of close-up. For example, when doing portrait photography, an object has an amount of light per square meter. In contrast with this, in the close-up, the object has only an amount of light per square centimeter, i.e., an amount of light corresponding to one ten thousandth of the amount of light in case of the portrait.

Further, in the semiconductor imaging apparatus according to the third prior art, no consideration is given to an effect due to interference of the light to be imaged. In the prior art, it is known in the pinhole camera that, when a pinhole has a hole diameter of 0.2 mm or less, the obtained image becomes unclear due to the increased effect of the optical interference. Since the pinhole has a diameter in an approximate range of several tens to several hundreds microns in the third prior art, it is impossible to provide a clear image due to optical diffraction.

Further, in the semiconductor imaging apparatus according to the third prior art, the cover glass is associated with the pinhole, resulting in a problem of a decreased amount of light due to partial reflection on the cover glass and impurity in the glass, and other problems of dirt and condensation caused on the cover glass.

Further, when the cover glass is disposed inside the black box, light is reflected at both a glass surface and the imaging device therebetween, resulting in a defect of lower resolution.

Further, when the cover glass is disposed outside the black box, light emitted from a portion except the object is also reflected at a glass, and the object is irradiated with the light, resulting in a problem of an unclear image due to variations in an amount of light.

In view of the foregoing problems, it is an object of the present invention to provide a compact and lightweight solid state close-up imaging apparatus which can be moved to a desired position for close-up.

According to the present invention as claimed in claim 1, for achieving the above-mentioned object, there is provided a solid state close-up imaging apparatus to pick up a desired image(s) by using the principle of a pinhole camera. In the solid state close-up imaging apparatus including light irradiating means for irradiating an object with light, the object is disposed at a close position, and the desired image is obtained by taking in the light irradiated by the light irradiating means and reflected at the object.

According to the present invention as claimed in claim 2, there is provided a solid state close-up imaging apparatus according to claim 1, in which the black box takes in the light reflected at the object disposed at the close position through a pinhole provided in the black box to have a predetermined pinhole diameter, and the image of the object is produced on a light receiving surface of an image pickup device disposed in the black box.

According to the present invention as claimed in claim 3, there is provided a solid state close-up imaging apparatus according to claim 2, in which the pinhole is formed to have a diameter less than 0.3 mm, and the image pickup device is disposed at a position close to the pinhole.

According to the present invention as claimed in claim 4, there is provided a solid state close-up imaging apparatus according to claim 3, in which the black box is formed to have a distance of 10 mm or less between the pinhole and a light receiving surface of the image pickup device.

According to the present invention as claimed in claim 5, there is provided a solid state close-up imaging apparatus according to claim 3, in which the black box is formed to have a distance in the range of 3 to 10 mm between the pinhole and a light receiving surface of the image pickup device.

According to the present invention as claimed in claim 6, there is provided a solid state close-up imaging apparatus according to any one of claims 1 to 5, in which the object is disposed at a position spaced a distance substantially equivalent to a length between the pinhole and a light receiving surface of the image pickup device.

According to the present invention as claimed in claim 7, there is provided a solid state close-up imaging apparatus according to any one of claims 1 to 5, in which the object is disposed at a position spaced substantially one half a length between the pinhole and a light receiving surface of the image pickup device.

According to the present invention as claimed in claim 8, there is provided a solid state close-up imaging apparatus according to any one of claims 2 to 5, in which the object is disposed at a position spaced n apart from the pinhole with respect to a length m between the pinhole and a light receiving surface of the imaging pickup device.

According to the present invention as claimed in claim 9, there is provided a solid state close-up imaging apparatus according to any one of claims 1 to 5, in which the solid state close-up imaging apparatus picks up an image of the object spaced 2 cm or less apart from the pinhole.

According to the present invention as claimed in claim 10, there is provided a solid state close-up imaging apparatus according to any one of claims 1 to 9, in which the solid state close-up imaging apparatus sets to 5 mm or less a height of an object to be imaged.

According to the present invention as claimed in claim 11, there is provided a solid state close-up imaging apparatus according to any one of claims 2 to 10, in which the black box is provided in the frustum form.

According to the present invention as claimed in claim 12, there is provided a solid state close-up imaging apparatus according to any one of claims 2 to 10, in which the black box is provided in the gable roof form.

According to the present invention as claimed in claim 13, there is provided a solid state close-up imaging apparatus according to any one of claims 2 to 10, in which the black box is provided in the hemispherical form.

According to the present invention as claimed in claim 14, there is provided a solid state close-up imaging apparatus according to any one of claims 11 to 13, in which the light irradiating means is disposed to extend along a side surface of the black box so as to irradiate with light the object disposed in front of the pinhole.

According to the present invention as claimed in claim 15, there is provided a solid state close-up imaging apparatus according to any one of claims 2 to 14, in which the image pickup device is a charge coupled device.

According to the present invention as claimed in claim 16, there is provided a solid state close-up imaging apparatus according to any one of claims 2 to 14, in which the image pickup device is a CMOS image sensor.

According to the present invention as claimed in claim 17, there is provided a solid state close-up imaging apparatus according to any one of claims 2 to 16, in which a bottom surface of the black box includes a printed circuit board.

According to the present invention as claimed in claim 18, there is provided a solid state close-up imaging apparatus according to any one of claims 2 to 16, in which a bottom surface of the black box includes a flexible printed circuit board.

According to the present invention as claimed in claim 19, there is provided a solid state close-up imaging apparatus according to any one of claims 1 to 18, in which the light irradiating means includes a light emitting diode or a laser diode.

According to the present invention as claimed in claim 20, there is provided a solid state close-up imaging apparatus according to any one of claims 1 to 18, in which the light irradiating means introduces light emitted by a light emitting device to the object via an optical fiber, and irradiates the object.

A description will now be given of the operation of the solid state close-up imaging apparatus having the above structure.

According to the present invention, the object is irradiated with the light from the light emitting device, and the desired image is obtained on the principle of the pinhole camera by using the light reflected at the object. It is thereby possible to solve a problem of an insufficient amount of light at a time of close-up of the object, and produce an image with high contrast enough to distinguish the object.

Further, the black box takes in the light reflected at the object disposed at the close position through the pinhole provided in the black box to have the predetermined diameter. The image of the object is produced on the light receiving surface of the image pickup device disposed in the black box. The light reflected at the object produces the image on the light receiving surface of the image pickup device through the action of imaging by the pinhole. It is thereby possible to realize production of the image by the reflected light by using the pinhole instead of lens.

The black box is formed such that, with the pinhole having a microscopic hole diameter less than 0.3 mm, the distance between the pinhole and the light receiving surface of the image pickup device is set to 10 mm or less. As a result, it is possible to pick up the image having the great depth of field, and pick up the clear image. Additionally, it is possible to make the black box smaller, and image the magnified occlusion portion, such as portion in a human body or a narrow gap, which can not directly be observed by the naked eye.

It is also possible to provide an image m/n times as large as the object by disposing the object at a position spaced n apart from the pinhole with respect to a length m between the pinhole and the light receiving surface of the imaging pickup device.

Further, the black box is provided in any one of the frustum form, the gable roof form, and the hemispherical form. It is thereby possible to direct toward the object the light irradiating means extending along the side surface of the black box, and obtain the clear image.

Fig. 1 is a sectional view showing a structure of an imaging portion in the first embodiment according to a solid state close-up imaging apparatus of the present invention;

Fig. 2 is a photograph of an experimental result using the apparatus of the present invention;

Fig. 3 is a photograph of an experimental result of the apparatus of the present invention;

Fig. 4 is a photograph of an experimental result of the apparatus of the present invention;

Fig. 5 is a photograph of an experimental result of the apparatus of the present invention;

Fig. 6 is a block diagram showing a configuration of an image processing portion according to the solid state close-up imaging apparatus of the present invention;

Fig. 7 is a perspective view showing an appearance of a black box in the second embodiment according to the solid state close-up imaging apparatus of the present invention;

Fig. 8 is a perspective view showing an appearance of a black box in the third embodiment according to the solid state close-up imaging apparatus of the present invention;

Fig. 9 is a diagram showing a structure of a prior art apparatus;

Fig. 10 is a diagram showing a structure of a prior art apparatus; and

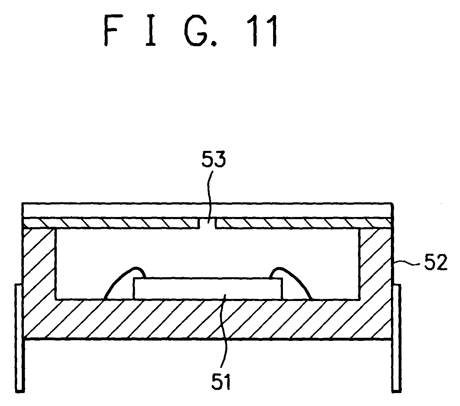

Fig. 11 is a diagram showing a structure of a prior art apparatus.

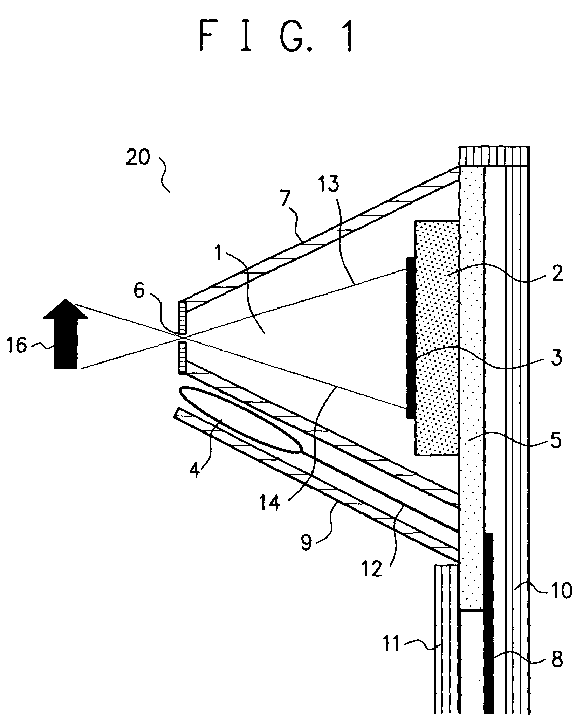

A detailed description will now be given of preferred embodiments according to a solid state close-up imaging apparatus of the present invention referring to the accompanying drawings. Figs. 1 to 8 show the preferred embodiments according to the solid state close-up imaging apparatus of the present invention.

Fig. 1 shows a sectional structure of an imaging portion 20 in the first embodiment according to the solid state close-up imaging apparatus of the present invention. As shown in Fig. 1, in the structure of the imaging portion 20 of the solid state close-up imaging apparatus, an image pickup device 2 is accommodated in a black box 1 with a truncated quadrangular prism form including a light shielding plate 7 and a printed board 5. A pinhole 6 is provided in a top face of the black box 1 with the truncated quadrangular prism form having the printed board 5 as a bottom face. The pinhole 6 is opposed to a light receiving surface 3 of the image pickup device 2. The image pickup device 2 is fixed to the printed board 5, for example, by soldering a terminal of the image pickup device 2 to the printed board 5. A flexible printed board 8 is connected with the printed board 5 at a surface on the side opposed to the black box 1, and transmits an electric signal from the printed board 5 to an image processing portion 32 as will be discussed infra.

The black box 1 including the light shielding plate 7 and the printed board 5 is shielded such that no external light can enter the black box 1 through a portion except the pinhole 6. Dull surface treatment and/or black surface treatment is made to the inside of the light shielding plate 7 so as to prevent diffusion of light inside the black box.

Additionally, as shown in Fig. 1, a light emitting device 4 extends, to light an imaging object, along a side surface of the black box 1 with the truncated quadrangular prism form. Since the black box 1 has the truncated quadrangular prism form, the light emitting device 4 can emit light toward an object 16. Further, light emitted from the light emitting device 4 has an emission angle of about 20 degrees so that the entire imaged area of the object 16 can completely be illuminated.

A lead wire 12 extends from the light emitting device 4, and is connected to the printed board 5 supplying power to the light emitting device 4. The light emitting device 4 uses light reflected at the object 16 to provide an enough amount of light to actuate the image pickup device 2. Here, a LED (Light Emitting Diode) or a laser diode is employed as the light emitting device 4 to emit white light with wavelengths ranging from 400 to 800 nm. Further, a CCD (Charge Coupled Device) or a CMOS image sensor is used as the image pickup device 2 to cover the entire wavelength range of light emitted from the light emitting device 4.

Cases 10, 11 are supporting means for supporting in view of strength and protecting from damage the printed board 5, the flexible printed board 8, and the black box 1.

A case 9 supports the light emitting device 4, and protects the light emitting device 4 and the lead wire 12 thereof.

In the embodiment having the above structure, the pinhole provided in the black box 1 has a hole diameter less than 0.3 mm, and a distance between the pinhole and the light receiving surface of the image pickup device 2 is set to 10 mm or less. The reason why these settings are required will now be discussed.

In the prior art, it has been an established theory in the pinhole camera that, as the pinhole diameter is made smaller, the resultant image becomes more unclear due to the optical interference. The present invention relates to a solid state close-up imaging apparatus for pinhole type characterized by the distance between a pinhole and the image pickup device is more shorter (e.g. 10 mm or less) than the former pinhole camera which distance has been a tenth cm order. Hence, And it is shown by experimental results that a clear image can be provided without the effect of the optical interference in case of a short distance between the pinhole 6 and the light receiving surface 3 of the image pickup device 2.

A detailed description will now be given of the experiment to determine the above-mentioned relationship between the hole diameter of the pinhole 6 and definition of the image on the light receiving surface 3.

In the experiment, a distance between the pinhole 6 and the light receiving surface 3 was set to 7.5 mm, and a distance between the pinhole 6 and the object 16 was set to 7 mm. The light receiving surface 3 of the image pickup device 2 had a size of $7 \times 7$ mm, and black letters "88" with height of 2 mm was printed on a white paper as the object.

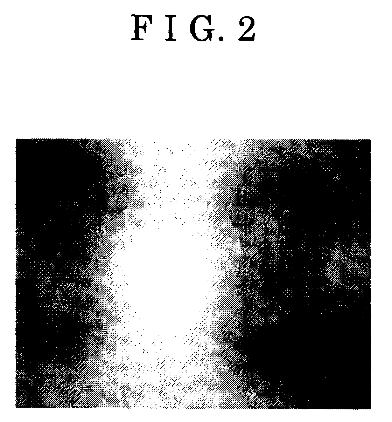

Fig. 2 is a photograph taken when the hole diameter of the pinhole 6 was set to 0.4 mm. As shown in Fig. 2, when the object was imaged with the hole diameter of 0.4 mm, it was impossible to read the letters in the resultant image.

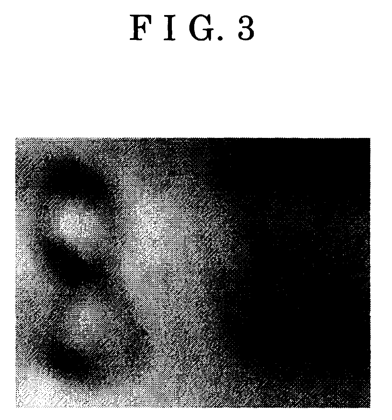

Fig. 3 is a photograph taken when the hole diameter of the pinhole 6 was set to 0.3 mm. As shown in Fig. 3, when the object was imaged with the hole diameter of 0.3 mm, the letters could be read a little in the resultant image, but the image was still unclear.

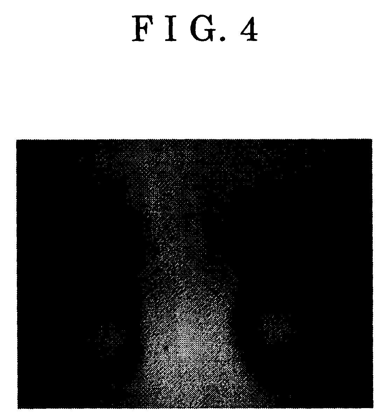

Fig. 4 is a photograph taken when the hole diameter of the pinhole 6 was set to 0.2 mm. As shown in Fig. 4, when the object was imaged with the hole diameter of 0.2 mm, it was possible to see clearly letters in the resultant image.

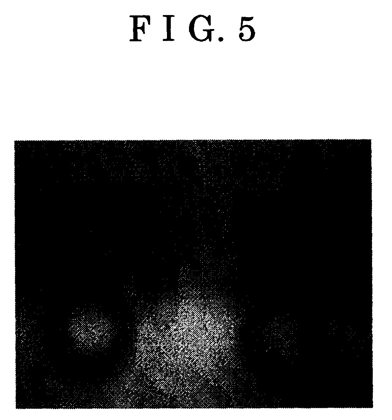

Fig. 5 is a photograph taken when the hole diameter of the pinhole 6 was set to 0.1 mm. As shown in Fig. 5, when the object was imaged with the hole diameter of 0.1 mm, it was also possible to see clearly letters in the resultant image.

As is evident from the experimental results, with the short distance between the pinhole 6 and the image on the light receiving surface 3, as the hole diameter of the pinhole is made smaller, the definition of the image can be more improved.

That is, a relationship between the hole diameter of the pinhole and diffraction can be written by the following expression:

$$d = (0.61X) \times \lambda/D \qquad (1)$$

where D denotes a hole diameter of the pinhole, $\lambda$ is wavelength of light passing through the pinhole, X is the distance between the pinhole and the light receiving surface of the image pickup device, and d is a diameter obtained by the diffraction.

As the hole diameter D of the pinhole is made smaller, the diameter d by the diffraction becomes larger, resulting in an unclear image. However, in the embodiment, the hole diameter D of the pinhole is made smaller, and the distance X between the pinhole and the light receiving surface of the image pickup device is set shorter. It is thereby possible to minimize the diameter d by the diffraction, and provide a clear image.

Next a description will be given of a relationship between the size of the object to be imaged, and the distance between the pinhole and the light receiving surface of the solid state imaging device, or the distance between the pinhole and the object while making a comparison between the third prior art, i.e., the semiconductor imaging apparatus disclosed in Japanese Laid-open Patent Application No. Hei 10-65132 (65132/1998) and the embodiment.

In general, a relationship in the pinhole camera between the object and the image can be written as the following expression (2):

$$a = b \times m/n \qquad (2)$$

where b is height of the object, a is height of the image, m is the distance between the pinhole of the pinhole camera and the image, and n is the distance between the pinhole and the object.

According to the third prior art, the semiconductor imaging apparatus disclosed in Japanese Laid-open Patent Application No. Hei 10-65132 (65132/1998) has no lighting system for the object. Therefore, when the apparatus is used for the close-up, it is impossible to produce an image with high contrast enough to distinguish the object by a slight amount of light at a time of close-up. For example, when doing portrait photography, an object has an amount of light per square meter. In contrast with this, an object has only an amount of light per square centimeter, i.e., the amount of light corresponding to one ten thousandth of the amount of light in case of the portrait. Consequently, the semiconductor imaging apparatus according to the third prior art is unsuitable for close-up.

Further, in the semiconductor imaging apparatus according to the third prior art, m/n becomes 2 depending upon the expression (2) when the height of the close-up image is set to 5 mm, and the light receiving surface of the solid state imaging device for image pickup is set to about 10 mm.

Hence, if the distance n between the pinhole and the object is set to 400 mm or more (which is a typical value in the prior art pinhole camera) in the semiconductor imaging apparatus according to the third prior art, the distance m between the pinhole and the light receiving surface becomes 800 mm or more, resulting in a large-sized black box in the semiconductor imaging apparatus according to the third prior art.

Further, in the semiconductor imaging apparatus according to the third prior art, the pinhole has the diameter in the approximate range of several tens to several hundreds microns. As a result, as described above, the distance between the pinhole and the light receiving surface of the imaging pickup device is inevitably extended in the semiconductor imaging apparatus according to the third prior art. In view of the above expression (1) with these facts, it is shown that the semiconductor imaging apparatus according to the third prior art has a problem of the resultant unclear image due to the increased diameter d by the diffraction.

In contrast with this, in the embodiment, when the height b of the close-up object is set to 5 mm, and the light receiving surface of the imaging pickup device to receive light from the image is set to about 10 mm, it is possible to fix to 10 mm the distance between the pinhole 6 and the light receiving surface of the imaging pickup device by setting to 5 mm the distance n between the pinhole 6 and the object 16, thereby providing a small-sized black box. Alternatively, if the distance n between the pinhole 6 and the object 16 is set to 5 mm, and the distance between the pinhole 6 and the light receiving surface of the imaging pickup device is set to 5 mm, it is possible to pick up an image having a size identical with that of the object, and make a black box smaller. That is, it is possible to provide an image m/n times as large as the object by disposing the object at a position spaced n apart from the pinhole with respect to the length m between the pinhole and the light receiving surface of the imaging pickup device.

Although the embodiment has been described in case of the distance of 5 mm between the pinhole 6 and the object 16, it is possible to pick up a clear close-up image as long as the distance is set to 2 cm or less. Further, though the distance between the pinhole 6 and the light receiving surface of the image pickup device 2 was set to 7.5 mm in the experiment, it is also possible to pick up a clear image as long as the distance is set to 10 mm or less, or is preferably in the range of 5 to 10 mm.

A discussion will now be given of a relationship between the pinhole and the outside air.

In the embodiment, as shown in Fig. 1, any component is not mounted on a top surface of the pinhole so that the black box contacts with the outside air. However, when the pinhole has a microscopic diameter as set forth above, in the black box, a closed space is formed to hardly cause condensation because of a slow variation in temperature. Only condensation on each cell has an effect on the CCD used as the image pickup device, resulting in slight degradation of definition of the image. On the other hand, with a lens camera instead of the pinhole, a lens is brought into direct contact with the outside air in convection so that the condensation is immediately caused on the lens by an effect of a difference in temperature. Further, since the condensation is extended on a light-sensitive surface by the lens with a small diameter, a great scattering of light is caused even by a little condensation.

A description will now be given of an imaging operation of the solid state close-up imaging apparatus having the above structure.

The black box 1 can take in external light through the pinhole 6 provided in the light shielding plate 7. Light to be imaged from the object 16 is taken in through the pinhole 6, and produces a two-dimensional image on the light receiving surface 3 of the image pickup device 2 through the action of imaging by the pinhole 6. The light receiving surface 3 of the image pickup device 2 is a two-dimensional light receiving device, and the image pickup device 2 converts the image into an electric signal. In the embodiment, the image pickup device has 330- by 350-pixel resolution.

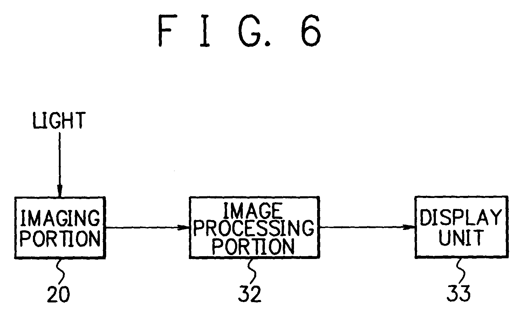

The electric signal from the image pickup device 2 is transmitted to the image processing portion 32 shown in Fig. 6 through the printed board 5, and the flexible printed board 8. The image processing portion 32 takes as input an image signal from the imaging portion 20, and performs signal processing to display the image on a display unit 33. In the embodiment, the signal processing converts the input signal into a video signal. By displaying the video signal on the display unit 33 such as TV screen, it is possible to display the image of the object 16.

As set forth above, in the embodiment, according to the facts shown by the above experiments, the pinhole is set to have the diameter less than 0.3 mm, and the distance between the pinhole and the light receiving surface of the image pickup device is set to 10 mm or less. As a result, it is possible to pick up an image having great depth of field, and pick up a clear image. Further, it is possible to make the black box smaller, and image a magnified occlusion portion, such as portion in a human body or a narrow gap, which can not directly be observed by the naked eye.

Further, the object is irradiated with the light from the light emitting device 4, and a desired image is obtained on the principle of the pinhole camera by using the light reflected at the object. It is thereby possible to solve a problem of an insufficient amount of light at the time of close-up of the object, and produce an image with high contrast enough to distinguish the object.

Further, the black box takes in the light reflected at the object disposed at the close position through the pinhole provided in the black box to have the predetermined diameter. The image of the object is produced on the light receiving surface of the image pickup device disposed in the black box. The light reflected at the object produces the image on the light receiving surface of the image pickup device through the action of imaging by the pinhole. It is thereby possible to realize production of the image by the reflected light by using the pinhole instead of the lens.

Since no lens is used for the imaging, it is possible to avoid the following drawbacks caused at a time of use of the lens. In the first drawback, with the lens for the imaging, a high-precision lens supporting frame is required to support, with a high degree of precision, a shift of the lens with respect to an optical axis, curvature of the lens, the distance between the lens, and the distance between the lens and the image pickup device. In the second drawback, soft handling is required, and vibration and shock must be avoided for the lens. In the third drawback, the heavy lens inevitably requires a heavy lens frame for supporting the lens. In the fourth drawback, the lens has problems such as dark image, and partially unsharp image due to dirt on the lens, and another problem of an unclear image due to the condensation. In the fifth drawback, since use of the lens results in shallow depth of field, only a part of the object having the greater depth can properly be focused.

In contrast with this, in the embodiment, the pinhole is used instead of the lens to enable the production of the image by the light to be imaged. It is thereby possible to eliminate the need for the lens, and prevent the above drawbacks.

Further, since the black box has the truncated quadrangular prism form, it is possible to direct toward the object the light emitting device extending along the side surface of the black box, and obtain a clear image even in the imaging of the occlusion portion such as portion in the human body or the narrow gap.

While the embodiment has been described by using the black box with the truncated quadrangular prism form, the black box may be provided in the truncated polygonal pyramid form or the truncated circular cone form. By using the black box with any one of these forms, it is also possible to direct toward the object the light emitting device extending along the side surface, and obtain a clear image even in the imaging of the occlusion portion such as portion in the human body or the narrow gap.

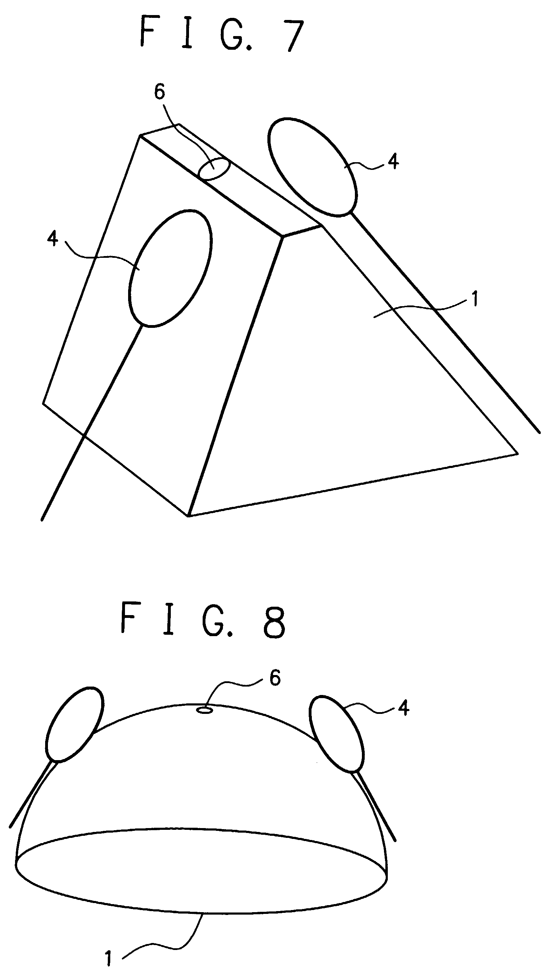

Referring now to Fig. 7, a description will be given of the second embodiment according to the solid state close-up imaging apparatus of the present invention. Fig. 7 is a perspective view showing a periphery of a black box of the solid state close-up imaging apparatus of the present invention.

In the solid state close-up imaging apparatus of the embodiment, as shown in Fig. 7, a black box 1 is provided in the gable roof form, and a pinhole 6 is provided at a center of a ridge line thereof. Further, light emitting devices 4 are disposed to extend along the both side slopes.

It is thereby possible to provide the same effects as those in the first embodiment, and irradiate an object 16 with light from the two light emitting devices at different angles so as to more clearly pick up even small details of image.

Referring now to Fig. 8, a description will be given of the third embodiment according to the solid state close-up imaging apparatus of the present invention. Fig. 8 is a perspective view showing a periphery of a black box of the solid state close-up imaging apparatus of the present invention.

In the solid state close-up imaging apparatus of the embodiment, as shown in Fig. 8, a black box 1 is provided in the hemispherical form, and a pinhole 6 is provided at a vertical position of the hemisphere. Further, as shown in Fig. 8, light emitting devices are disposed to extend along a spherical surface of the hemisphere.

In the structure, it is also possible to provide the same effects as those in the first and second embodiments.

While the above embodiments have been described as preferred embodiments of the present invention, it is to be understood that the invention should not be limited to this, and changes and variations may be made without departing from the spirit of the invention.

For example, the image pickup device 2 can pick up a black-and-white image or a color image. Although the embodiments have structures to pick up a dynamic image, the same effects can be obtained in another structure to pick up a static image. While only the image pickup device is contained on the printed board in the imaging portion, the image processing portion can also be contained in the imaging portion if the image processing portion can be made smaller. Although the pinhole diameter is set to 0.2 mm in the embodiments described above, the pinhole diameter may be varied within the spirit of the present invention, i.e., may be less than 0.3 mm in view of luminous intensity of the light emitting device, spectral reflectivity of the object, definition of the image, and sensitivity of the image pickup device. Further, the video signal is used as the output signal fed to the display unit, but the same effects can be provided as long as any type of picture signal including, for example, digital signal may be used. Although the image pickup device and the light emitting device are contained on the printed board, the same effects can be provided by mounting them on the flexible printed board. While the optical axis of the imaging is directed perpendicular to a direction in which the flexible printed board is withdrawn in the above discussion, the same effects of the present invention can be provided even when the optical axis is set in a desired direction. Further, instead of irradiating the object with the light from the one light emitting device, two or more light emitting devices may be used to image the object. In addition, a cover may be substituted for the printed board forming the partial black box. Although the light emitting device is employed in the above-mentioned embodiments, the object may be irradiated with light which is emitted at a position apart from the black box, and is introduced via an optical fiber. Further, the same effects can be obtained by providing the black box in a combination of the frustum form, the gable roof form, and the hemispherical form.

As is evident from the above description, in the solid state close-up imaging apparatus of the present invention, the object is irradiated with the light from the light irradiating means, and the desired image is obtained on the principle of the pinhole camera by using the light reflected at the object. It is thereby possible to solve the problem of the insufficient amount of light at the time of close-up of the object, and produce the image with high contrast enough to distinguish the object.

Further, the black box takes in the light reflected at the object disposed at the close position through the pinhole provided in the black box to have the predetermined diameter. The image of the object is produced on the light receiving surface of the image pickup device disposed in the black box. The light reflected at the object produces the image on the light receiving surface of the image pickup device through the action of imaging by the pinhole. It is thereby possible to realize production of the image by the reflected light by using the pinhole instead of the lens.

Since the pinhole is substituted for the lens to enable the production of the image by the reflected light, it is possible to avoid the following drawbacks caused at the time of use of the lens.

In the first drawback, with the lens for the imaging, the high-precision lens supporting frame is required to support, with the high degree of precision, the shift of the lens with respect to the optical axis, the curvature of the lens, the distance between the lens, and the distance between the lens and the image pickup device. In the second drawback, the soft handling is required, and the vibration and the shock must be avoided for the lens. In the third drawback, the heavy lens inevitably requires the heavy lens frame for supporting the lens. In the fourth drawback, the lens has problems such as dark image, and partially unsharp image due to the dirt on the lens, and another problem of the unclear image due to the condensation. In the fifth drawback, since use of the lens results in the shallow depth of field, only the part of the object having the greater depth can properly be focused.

Further, the black box is formed such that, with the pinhole having the microscopic hole diameter less than 0.3 mm, the distance between the pinhole and the light receiving surface of the image pickup device is set to 10 mm or less. As a result, it is possible to pick up the image having the great depth of field, and pick up the clear image. Additionally, it is possible to make the black box smaller, and image the magnified occlusion portion, such as portion in the human body or the narrow gap, which can not directly be observed by the naked eye.

It is also possible to provide the image m/n times as large as the object by disposing the object at the position spaced n apart from the pinhole with respect to the length m between the pinhole and the light receiving surface of the imaging pickup device.

Further, the black box is provided in any one of the frustum form, the gable roof form, and the hemispherical form. It is thereby possible to direct toward the object the light irradiating means extending along the side surface of the black box, and obtain the clear image.

**Claims**

1. A solid state close-up imaging apparatus for pinhole type to pick up images, the solid state close-up imaging apparatus comprising:

    light irradiating means for irradiating an object with light,
    wherein the object is disposed at a close position to the apparatus, and the desired image being obtained by taking in the light irradiated by the light irradiating means and reflected at the object surface.

2. A solid state close-up imaging apparatus for pinhole type to pick up images, the solid state close-up imaging apparatus comprising light irradiating means for irradiating an object with light, wherein the object is disposed at a close position to the apparatus, and the desired image being obtained by taking in the light irradiated by the light irradiating means and reflected at the object surface, and

the black box takes in the light reflected at the object disposed at the close position from through a pinhole provided in the black box to have a predetermined pinhole diameter, and the image of the object being produced on a light receiving surface of an image pickup device disposed in the black box.

3. A solid state close-up imaging apparatus according to claim 2, wherein the pinhole is formed to have a diameter less than 0.3 mm, and the image pickup device being disposed at a position close to the pinhole.

4. A solid state close-up imaging apparatus according to claim 3, wherein the black box is formed to have a distance of 10 mm or less between the pinhole and a light receiving surface of the image pickup device.

5. A solid state close-up imaging apparatus according to claim 3, wherein the black box is formed to have a distance in the range of 3 to 10 mm between the pinhole and a light receiving surface of the image pickup device.

6. A solid state close-up imaging apparatus according to any one of claims 2 to 5, wherein the object is disposed at a position spaced a distance substantially equivalent to a length between the pinhole and a light receiving surface of the image pickup device.

7. A solid state close-up imaging apparatus according to any one of claims 2 to 5, wherein the object is disposed at a position spaced substantially one half a length between the pinhole and a light receiving surface of the image pickup device.

8. A solid state close-up imaging apparatus according to any one of claims 2 to 5, wherein the object is disposed at a position spaced n apart from the pinhole with respect to a length m between the pinhole and a light receiving surface of the imaging pickup device.

9. A solid state close-up imaging apparatus according to any one of claims 2 to 5, wherein the solid state close-up imaging apparatus picks up an image of the object spaced 2 cm or less apart from the pinhole.

10. A solid state close-up imaging apparatus according to any one of claims 1 to 9, wherein the solid state close-up imaging apparatus sets to 5 mm or less a height of an object to be imaged.

11. A solid state close-up imaging apparatus according to any one of claims 2 to 10, wherein the black box is provided in the frustum form.

12. A solid state close-up imaging apparatus according to any one of claims 2 to 10, wherein the black box is provided in the gable roof form.

13. A solid state close-up imaging apparatus according to any one of claims 2 to 10, wherein the black box is provided in the hemispherical form.

14. A solid state close-up imaging apparatus according to any one of claims 11 to 13, wherein the light irradiating means is disposed to extend along a side surface of the black box so as to irradiate with light the object disposed in front of the pinhole.

15. A solid state close-up imaging apparatus according to any one of claims 2 to 14, wherein the image pickup device is a charge coupled device.

16. A solid state close-up imaging apparatus according to any one of claims 2 to 14, wherein the image pickup device is a CMOS image sensor.

17. A solid state close-up imaging apparatus according to any one of claims 2 to 16, wherein a bottom surface of the black box includes a printed circuit board.

18. A solid state close-up imaging apparatus according to any one of claims 2 to 16, wherein a bottom surface of the black box includes a flexible printed circuit board.

19. A solid state close-up imaging apparatus according to any one of claims 1 to 18, wherein the light irradiating means includes a light emitting diode or a laser diode.

20. A solid state close-up imaging apparatus according to any one of claims 1 to 18, wherein the light irradiating means introduces light emitted by a light emitting device to the object via an optical fiber, and irradiates the object.

# F I G. 1

F I G. 2

# F I G. 3

# F I G. 4

# F I G. 5

# F I G. 6

LIGHT

↓

```
┌──────────┐      ┌──────────────┐      ┌──────────┐
│ IMAGING  │─────▶│    IMAGE     │─────▶│ DISPLAY  │
│ PORTION  │      │  PROCESSING  │      │  UNIT    │
│          │      │   PORTION    │      │          │
└──────────┘      └──────────────┘      └──────────┘
     20                  32                  33
```

# F I G. 7

# F I G. 8

# F I G. 9

# F I G. 10

IMAGE-AMPLIFICATION PROCESSOR ~45

CRT ~46

# F I G. 11

53

52

51